# DEMANDE DE BREVET EUROPEEN

(11) **EP 0 725 405 A1**
(43) Date de publication de la demande: **07.08.1996**
(21) Numéro de dépôt: 96400225.7
(22) Date de dépôt: 01.02.1996
(51) Int. Cl.: G21C 7/12

(54) **Dispositif électromagnétique pour le déplacement d'un ensemble absorbant de réacteur nucléaire**

(30) Priorité: 03.02.1995 FR 9501273
(71) Demandeur: COMMISSARIAT A L'ENERGIE ATOMIQUE, 75015 Paris (FR)
(72) Inventeur: Bergamaschi, Yves, F-13100 Aix en Provence (FR)
(74) Mandataire: Dubois-Chabert, Guy

(57) **Abrégé**

Une tige de commande (A) d'une grappe d'éléments absorbeurs de neutrons (5) à enfoncer dans un coeur de réacteur nucléaire à une profondeur variable est commandée par un moteur électromagnétique linéaire (B) qui remplace tous les mécanismes de transmission susceptibles d'être endommagés par les efforts et les chocs. Il est proposé de construire une portion de la tige de commande (A) servant d'induit en aluminium ou en cuivre renforcé d'une dispersion homogène de particules stables thermiquement pour maintenir les caractéristiques mécaniques de ces métaux à haute température sans diminuer sensiblement la conductivité électrique.

## Description

La présente invention concerne un dispositif électromagnétique qui sert au déplacement d'un ensemble absorbant les neutrons dans le coeur d'un réacteur nucléaire, et qui est placé à l'extérieur d'une enceinte étanche cylindrique et amagnétique en communication avec la cuve de ce réacteur.

L'invention trouve une application importante, bien que non exclusive, à la constitution de dispositifs de déplacement d'ensembles absorbants destinés à assurer un arrêt de sécurité d'un réacteur à eau pressurisée piloté avec ou sans dilution d'un poison neutronique dans l'eau primaire.

On sait que, pour le pilotage des réacteurs à eau pressurisée actuellement construits, on dispose généralement de deux moyens d'action sur la réactivité : la dilution dans l'eau primaire d'un poison neutronique (acide borique) et l'introduction dans le coeur d'ensembles solides et compacts absorbeurs de neutrons se présentant, par exemple, sous la forme de grappes de crayons.

Durant le fonctionnement normal du réacteur, certaines grappes absorbantes sont introduites plus ou moins profondément dans le coeur pour régler la réactivité et donc la puissance fournie par le réacteur.

D'autres grappes sont maintenues en position haute et extraites du coeur dans l'attente d'une descente par gravité en position basse, conjointement aux premières, pour abaisser très rapidement la réactivité dans le cas d'une augmentation brusque de cette dernière, et par conséquent arrêter en urgence le réacteur pour le mettre en sécurité.

On sait également que bien que les fonctions des grappes de réglage et d'arrêt diffèrent, celles-là sont commandées par des mécanismes électromécaniques qui sont tous identiques.

Ces mécanismes, pouvant par exemple être du type pas à pas à cliquets ou à vis-écrou, sont logés, à l'exception de leurs moyens de commande qui sont électromagnétiques, à l'intérieur d'une enceinte étanche tubulaire en communication avec l'intérieur de la cuve du réacteur et, de façon générale, dressée verticalement au-dessus du couvercle de fermeture de cette cuve.

Les mécanismes de commande des grappes absorbantes collaborent dans ce cas avec une tige centrale et coaxiale, dite "tige de commande", qui descend verticalement à l'intérieur de la cuve et supporte la grappe par des moyens d'accrochage déverrouillables à distance.

Typiquement, le diamètre de la tige de commande est de quelques centimètres alors que sa longueur est de plusieurs mètres. Son poids cumulé avec celui de la grappe dépasse 100 daN dans les réacteurs connus les plus puissants. L'enceinte étanche entourant la tige, dont l'épaisseur est nettement supérieure au centimètre, est en acier inoxydable amagnétique.

Enfin, on sait aussi que dans le cas du mécanismes électromécanique pas à pas à cliquets, les moyens magnétiques placés à l'intérieur de l'enceinte étanche sont constitués de pôles fixes et de pôles mobiles déplacés par entraînement magnétique au travers de cette enceinte ; certains pôles mobiles collaborent par l'intermédiaire de biellettes avec des cliquets qui, par leur basculement, viennent en prise avec des cannelures de la tige de commande pour maintenir ou déplacer d'un pas cette tige, ou bien se dégagent des cannelures pour, par exemple, lâcher la tige en question en cas d'arrêt d'urgence déclenché par coupure de l'alimentation électrique de la commande.

Le mécanisme pas à pas à cliquets, actuellement largement utilisé, est un système alternatif complexe et très bruyant, devant fonctionner dans l'eau et induisant sur les pièces en mouvements des chocs répétés, éprouvants pour le matériel et pouvant provoquer le détachement de bouts de revêtements de surfaces qui, après dispersion dans le circuit primaire et activation, contribuent à la contamination du circuit.

La maintenance et éventuellement le dépannage des moyens mécaniques du mécanisme à cliquets, et des autres mécanismes connus d'ailleurs, sont des opérations difficiles qu'il est nécessaire de réaliser en présence de rayonnements ionisants importants.

Des réacteurs à eau pressurisée du futur pourraient être pilotés sans dilution d'un absorbeur de neutrons dans le circuit primaire pour des raisons d'économies et de sécurité. La perte d'antiréactivité consécutive pourrait être compensée par l'usage de grappes absorbantes supplémentaires dont la fonction serait, durant le fonctionnement en puissance du réacteur, d'assurer un arrêt de sécurité. Ces grappes d'arrêt supplémentaires devraient être commandées par des mécanismes réalisant l'arrêt d'urgence dans des conditions de fiabilité absolue.

Bien qu'un dysfonctionnement des mécanismes électromécaniques connus, par exemple le coincement d'une pièce mécanique mobile quelconque empêchant le lâcher, soit hautement improbable, on peut s'interroger sur la capacité de ces mécanismes à assurer, dans les conditions de fiabilité requises, l'arrêt de sécurité d'un réacteur piloté sans dilution d'un poison.

Un moyen radical pour écarter tout risque d'entrave au lâcher de la tige de commande et à la chute de cette tige avec sa grappe absorbante associée pour les besoins de l'arrêt d'urgence est de supprimer les moyens mécaniques classiques et de n'utiliser que des moyens électromagnétiques, ces derniers permettant de déplacer et de maintenir fixe la tige de commande uniquement sous l'effet de forces produites par des champs magnétiques et directement exercées sur cette tige.

On n'a jamais utilisé de dispositif électromagnétique pour le déplacement d'ensembles absorbants d'un réacteur nucléaire. On connaît un cas d'utilisation d'un dispositif de ce type pour assurer un maintien en position haute et extraite du coeur dans l'attente d'un arrêt d'urgence.

Ce dispositif de maintien, équipant un réacteur nucléaire à neutrons rapides refroidi au sodium bien connu, est un électro-aimant coaxial à l'ensemble absorbant et présentant un plan d'accouplement horizontal. L'arrêt d'urgence est déclenché en interrompant le courant d'alimentation de l'électro-aimant. Un tel dispositif ne conviendrait pas à la commande de grappes de réglage dont la position doit être ajustée sur une étendue continue, sensiblement égale à la hauteur du coeur.

On a pourtant imaginé des dispositifs de moteur magnétique pas à pas pour déplacer des barres de commande : ils nécessitent des bobinages qui induisent des forces électromagnétiques sur des pôles de la tige qu'ils entourent ; le pas axial des bobinages diffère de celui des pôles, ce qui permet d'imposer un mouvement de la tige en alimentant successivement les bobinages jusqu'à ce que les pôles viennent en face d'eux. Mais cette conception nécessite d'alourdir la tige en y ajoutant les pôles, et les bobinages doivent être nombreux.

Un moyen pour déplacer une tige de commande avec sa grappe absorbante associée, par l'action d'un champ magnétique, serait de disposer à l'extérieur de l'enceinte étanche cylindrique des bobinages électromagnétiques constituant le stator d'un moteur linéaire à induction ; la tige de commande qui coulisse à l'intérieur de l'enceinte étanche constituerait l'induit de ce moteur.

Cependant, cette solution n'a jamais été proposée, peut-être à cause de l'importance de l'entrefer en partie constitué par la paroi de l'enceinte étanche amagnétique et de la faiblesse de la section de la tige de commande : un moteur linéaire à induction construit de la façon habituelle développerait une force de levage très faible en fonctionnant à la limite de saturation des circuits magnétiques.

La présente invention vise pourtant à fournir un dispositif électromagnétique, faisant appel à la technique du moteur linéaire à induction, pour le déplacement vertical d'une grappe d'arrêt vers le coeur et hors du coeur d'un réacteur nucléaire, permettant d'amener la grappe dans l'une ou l'autre de ses deux positions terminales, de maintenir éventuellement cette grappe en position haute et extraite du coeur durant le fonctionnement du réacteur et de la libérer rapidement à tout instant pour qu'elle tombe dans un temps donné très court. Le maintien en position haute peut éventuellement être avantageusement assuré en partie, ou totalement, grâce à un bobinage électromagnétique complémentaire.

Pour obtenir une force de levage répondant aux spécifications des réacteurs connus sans saturation des circuits magnétiques, on peut avantageusement utiliser une tige de commande comportant une chemise réalisée dans un matériau présentant une très grande conductivité électrique, par exemple, plus de vingt fois supérieure à celle des aciers inoxydables constitutifs des mécanismes connus.

Un matériau tel que, par exemple, le cuivre présente des caractéristiques électriques répondant à ce critère. Toutefois, ses caractéristiques mécaniques à chaud sont trop faibles.

C'est pourquoi on recourra plutôt à certains alliages nouveaux composés d'une matrice de cuivre ou d'aluminium dans laquelle on a introduit une dispersion homogène très fine de particules non métalliques stables thermiquement, telles que d'oxydes (alumine par exemple). Ces alliages sont généralement élaborés par les techniques de la métallurgie des poudres, et présentent une bonne résistance mécanique même à haute température. L'inventeur a remarqué que cette dispersion de particules non métalliques n'était pas accompagnée d'une baisse importante de conductivité électrique comparée à celle du métal de base. Ces alliages ont donc toutes les qualités requises pour la présente utilisation.

L'objectif est, en d'autres termes, de fournir un dispositif de déplacement et éventuellement de maintien de grappes d'arrêt qui, en étant dépourvu de pièces mécaniques mobiles constituant inévitablement des causes de dysfonctionnement, est plus sûr que les mécanismes électromécaniques connus et peut ainsi avantageusement équiper un réacteur à eau pressurisée piloté sans dilution d'un poison neutronique.

L'invention vise également à fournir un dispositif simple, silencieux, endurant et qui, en étant situé à l'extérieur de l'enceinte étanche, peut être facilement entretenu et éventuellement réparé sous une faible exposition aux rayonnements. En outre, il peut fonctionner avec un fluide emplissant l'enceinte étanche autre que l'eau : par exemple, un gaz.

Les caractéristiques et avantages de l'invention apparaîtront clairement à la lecture de la description qui suit d'un exemple de réalisation de l'invention ; description à laquelle quatre dessins sont annexés :
- la figure 1 représente une vue en coupe partielle d'un réacteur équipé d'un dispositif électromagnétique conforme à l'invention,
- la figure 2 représente une vue en coupe longitudinale du dispositif électromagnétique conforme à l'invention selon la ligne AA de la figure 3,
- la figure 3 représente une vue en coupe transversale de ce même dispositif selon la ligne BB de la figure 2,
- et la figure 4 est un détail agrandi de la figure 3, illustrant en outre l'utilisation d'un tube de guidage selon deux réalisations.

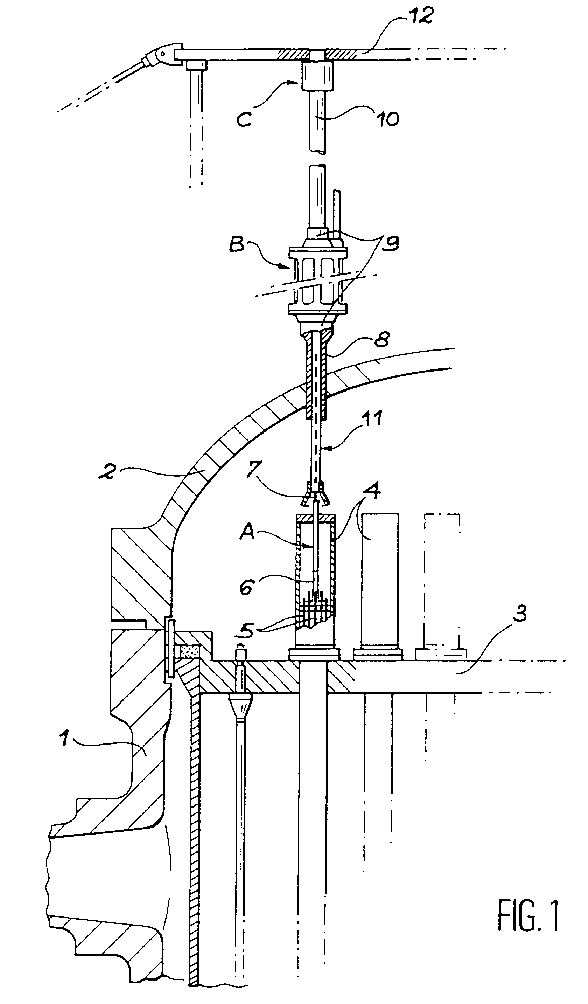

On a représenté sur la figure 1 la partie supérieure de la cuve 1 d'un réacteur nucléaire du type à eau pressurisée. La cuve 1 est fermée par un couvercle 2.

A l'intérieur de la cuve 1, au-dessus du coeur (non représenté), se trouve une structure de support 3 d'éléments de guidage 4 à travers lesquels se déplacent verticalement les grappes de crayons absorbants 5 destinées à contribuer à l'arrêt d'urgence du réacteur en tombant par gravité dans le coeur à partir d'une position d'attente au-dessus de ce coeur.

Chacune des grappes comporte un pommeau 6 raccordé, par un système de liaison déconnectable (non représenté), à une tige de commande A dont la partie supérieure (représentée ailleurs) constitue l'induit du dispositif électromagnétique selon l'invention.

Le système de liaison entre le pommeau 6 et la tige de commande A est constitué de la manière habituelle, lorsque le mécanisme de déplacement de la tige de commande A est à cliquets, par un manchon expansible fixé au bas de cette tige A et comportant des saillies venant s'engager dans des rainures à l'intérieur du pommeau 6 ; le dégagement étant obtenu en soulevant sur quelques centimètres au niveau de l'extrémité supérieure de la tige de commande A, une fois que le couvercle 2 est enlevé, une tige de démontage 7, centrale et coaxiale à la chemise de cette tige A, dont l'extrémité inférieure munie d'une olive permet l'écartement du manchon.

La partie supérieure de la tige de commande A coulisse à l'intérieur d'une enceinte étanche tubulaire en acier inoxydable amagnétique formée de trois éléments superposés et reliés de façon étanche. Ces éléments sont un tube adaptateur 8 lui-même raccordé de façon étanche au couvercle 2, une gaine 9 autour de laquelle est disposé le stator B du dispositif électromagnétique selon l'invention (simplement esquissé), et enfin, un fourreau 10 fermé en partie haute dont la longueur est au moins égale à la course de la grappe : soit plusieurs mètres.

Un second dispositif électromagnétique C (simplement esquissé) est placé au sommet du fourreau 10. Ce second dispositif C, pouvant par exemple être un électro-aimant comportant un plan d'accouplement horizontal, exerce une force d'attraction électromagnétique sur l'extrémité supérieure de la tige de commande A, une fois que celle-ci a été amenée en position haute par le stator B du dispositif selon l'invention.

Une manchette thermique 11, interposée entre la tige de commande A et le tube adaptateur 8, protège ce tube 8 d'éventuels courants de convection thermique vers la gaine 9 provoqués par un effet de thermosiphon.

Enfin, une plaque horizontale rigide 12 limite les contraintes et déformations dans l'enceinte sous pression, formée des éléments 8, 9 et 10, en cas de séisme.

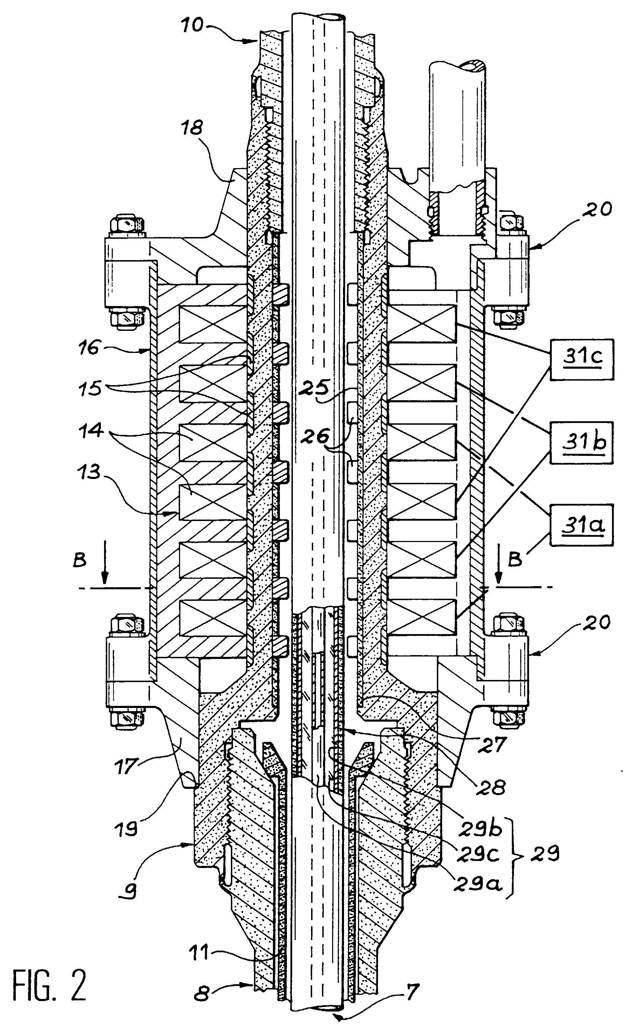

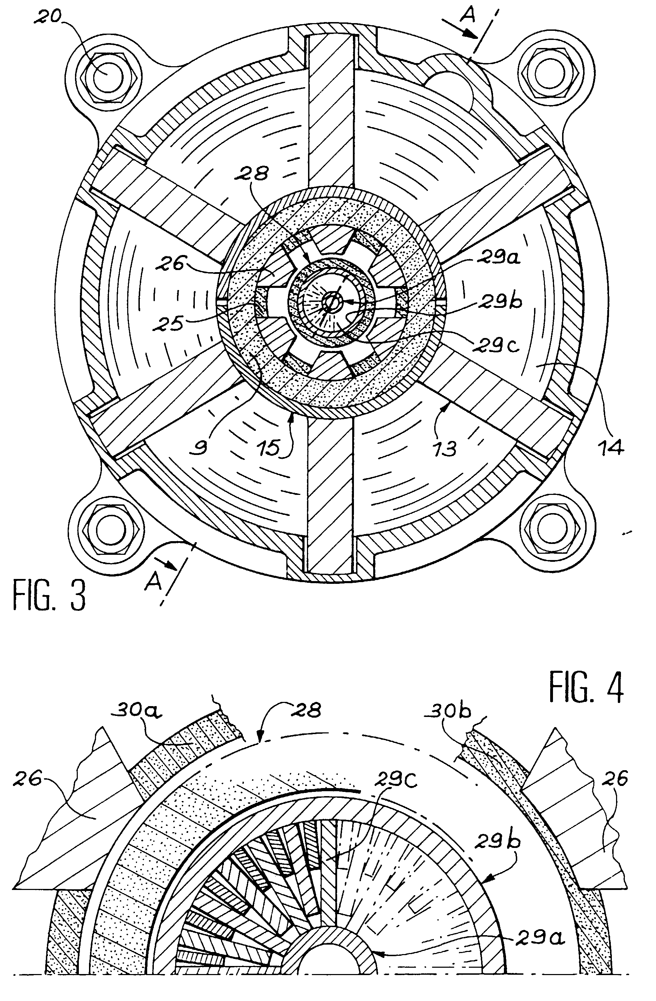

Le dispositif électromagnétique selon l'invention, constitué par le stator B et une partie de la tige de commande A servant d'induit, est montré en coupe longitudinale et transversale sur les figures 2 et 3.

Le stator B, disposé autour de la gaine cylindrique 9 qui est supportée par le tube adaptateur 8 et prolongée vers le haut par le fourreau 10, comporte un circuit magnétique feuilleté en forme de peignes 13 et des bobines circulaires 14 constituées de spires de fil, par exemple en cuivre, isolées.

Les peignes 13, par exemple au nombre de six, sont disposés parallèlement à l'axe du dispositif, régulièrement répartis autour de la gaine 9 et orientés radialement en présentant leurs dents au regard de cette gaine 9.

Les bobines 14 sont placées, autour de la gaine 9, de façon étagée en emplissant les encoches formées par l'espacement entre les dents des peignes 13.

Des bagues magnétiques 15, réalisées en deux demi-coquilles, sont montées dans des gorges circulaires usinées à l'extérieur de la gaine 9 en vis-à-vis des dents des peignes 13.

Les peignes 13 et les bobines 14 sont enfermés dans un logement qui les maintient, constitué d'un carter 16 et de deux flasques 17 et 18 ajustés sur la gaine 9 ; le flasque inférieur 17 reposant sur un épaulement 19 de la base de cette gaine 9. Des boulons 20 solidarisent les différents éléments du logement pour former avec le stator une unité indépendante que l'on met en place en l'enfilant sur la gaine 9.

Les peignes 13 sont encastrés, sur toute leur longueur, dans des rainures longitudinales 21 ménagées à l'intérieur du carter 16 et, à leurs extrémités, dans des rainures radiales 22 et 23 ménagées respectivement dans les flasques 17 et 18.

Le stator B est alimenté, à partir d'un réseau triphasé, par des câbles (non représentés) cheminant à l'intérieur d'un tube 24, fixé verticalement sur le flasque 18.

Les bobines 14 peuvent, par exemple, être connectées de manière à avoir une seule encoche par pôle et par phase.

Entre la gaine 9 et la tige de commande A est intercalée une manchette amagnétique 25 dans l'épaisseur de laquelle sont encastrés, au regard de chacune des dents des peignes 13, des pôles magnétiques radiaux 26, pouvant être feuilletés, dont une extrémité est taillée pour épouser l'intérieur de la gaine 9 et l'autre extrémité pour guider avec un jeu assez faible la tige de commande A. La section transversale des pôles magnétiques 26 peut varier tel qu'illustré sur la figure 3.

La manchette 25 est immobilisée en rotation et en translation par rapport à la gaine 9, l'arrêt en translation pouvant par exemple être obtenu, tel qu'illustré sur la figure 2, en intercalant cette manchette 25 entre un épaulement 27 de la gaine 9 et l'extrémité inférieure du fourreau 10. Les pôles magnétiques 26 sont fixés rigidement à la manchette 25.

Un tube guide amagnétique (non représenté), lié rigidement à la manchette amagnétique 25 ou à la gaine 9, peut être intercalé entre les pôles 26 et la tige de commande A.

La tige de commande A comporte en partie haute, sur une longueur au moins égale à la course de la grappe 5 plus la hauteur du stator B, une chemise 28 et un noyau magnétique 29 central et coaxial à cette chemise 28.

La chemise 28 et le noyau 29 forment l'induit du dispositif selon l'invention.

Le matériau constitutif de la chemise 28 est à la température de service du dispositif, qui est de plusieurs centaines de degrés dans l'application choisie, un très bon conducteur électrique présentant des caractéristiques mécaniques satisfaisantes de même ordre de grandeur que celles d'un acier.

On peut avantageusement utiliser, comme matériau constitutif de la chemise 28, une matrice de cuivre ou éventuellement d'aluminium renforcée par une dispersion homogène de particules non métalliques stables : par exemple, des particules d'oxydes.

L'oxyde d'aluminium (alumine) Al₂O₃ peut par exemple convenir en dispersion dans le cuivre. Il compte pour moins d'un centième du poids total, ce qui suffit pour maintenir les caractéristiques mécaniques du cuivre jusqu'à sensiblement la température de fusion. La conductivité électrique est d'environ 85% de celle du cuivre selon la teneur en alumine. Si une matrice d'aluminium est préférée, on peut l'enrichir en carbone, oxygène ou azote en particulier.

La chemise 28 peut éventuellement être recouverte d'une enveloppe (non représentée) isolant son matériau constitutif du milieu ambiant.

Le noyau 29 peut par exemple être constitué, tel qu'illustré sur les figures 2 et 3, d'un tube magnétique central 29.a et d'une gaine magnétique externe 29.b, formant un espace annulaire dans lequel sont disposées radialement des tôles magnétiques 29.c.

Le dispositif selon l'invention qui vient d'être décrit fait appel à la technique du moteur linéaire à induction. Il est asservi à un système de détection de la position de la tige de commande A pouvant, par exemple, être placé à l'extérieur du fourreau 10 et exploiter des phénomènes magnétiques, électromagnétiques, ou encore vibratoires.

Des moyens d'extraction de chaleur permettent au dispositif selon l'invention de fonctionner dans de bonnes conditions.

Dans les enroulements des bobines 14, logées dans les encoches des peignes inducteurs 13, circulent des courants créant un champ principal d'induction magnétique dirigé radialement (voir la figure 3).

Les enroulements étant convenablement répartis et alimentés par un réseau triphasé, le champ magnétique principal et la force magnétomotrice se propagent longitudinalement sous la forme d'une onde glissant à une vitesse linéaire qui est fonction de la pulsation du réseau et du nombre d'ondes. On peut envisager trois générateurs 31a, 31b et 31c de phases ϕ, ϕ+120° et ϕ+240° qui alimentent les bobines 14 successives. Le flux magnétique correspondant, traversant l'entrefer en partie constitué par l'épaisseur de la gaine amagnétique 9, engendre dans la chemise 28 de l'induit des forces électromotrices, donc des courants circulaires ; le flux magnétique dérivant de ces courants glisse par rapport à l'inducteur et à l'induit en restant immobile par rapport au flux principal. L'interaction de ces deux flux crée une poussée linéaire motrice axiale lorsque la vitesse mécanique de l'induit est inférieure à celle du champ principal. Le principe élémentaire de fonctionnement est alors celui du couplage magnétique asynchrone.

Le noyau 29 assure la fermeture du circuit magnétique. Les bagues magnétiques 15 réduisent la réluctance des circuits magnétiques en canalisant le flux.

Le dispositif selon l'invention amène l'induit et donc la tige de commande A avec sa grappe de crayons absorbants associée 5 dans l'une ou l'autre de deux positions terminales où la grappe 5 est totalement insérée dans le coeur ou au contraire totalement extraite de ce coeur.

Le jeu assez faible entre la tige de commande A et les pôles magnétiques 26 laisse à cette tige A la liberté nécessaire à un fonctionnement mécanique correct, tout en constituant un entrefer ayant un effet peu néfaste sur les performances du moteur.

La vitesse de montée et de descente de la grappe est réglable et des arrêts intermédiaires sont possibles.

On a représenté sur la figure 2 les six bobines 14 d'un moteur "élémentaire". La poussée motrice requise peut être obtenue en aboutant plusieurs moteurs "élémentaires" sans changer les dimensions radiales du stator B.

Le noyau 29 prolonge vers le haut la tige de démontage 7 (voir la figure 1) et transmet à cette tige 7 le mouvement de translation généré au niveau de l'extrémité supérieure de la tige de commande A lorsque l'on veut déconnecter cette tige A du pommeau 6 de la grappe 5.

Un système de verrouillage (non représenté) permet de la façon habituelle de solidariser la tige 7, prolongée par le noyau 29, à la tige de commande A en dehors de cette opération de déconnexion.

Le noyau magnétique 29 peut éventuellement être installé à demeure. Dans ce cas, la tige de démontage 7 doit monter jusqu'en haut de la tige de commande en passant à l'intérieur de ce noyau 29, par exemple dans le tube 29a.

La tige de démontage telle qu'envisagée dans cette invention peut ne pas servir au démontage d'un dispositif d'accouplement à mandrin expansible tel que celui de FR-A-2 261 595.

Le dispositif selon l'invention peut être utilisé, dans l'exemple d'application présenté, pour aider le second dispositif électromagnétique C à maintenir fixe en position haute pendant une durée prolongée la tige de commande A.

L'utilisation d'un dispositif électromagnétique complémentaire pour assurer un maintien partiel ou total de la tige de commande A en position haute durant le fonctionnement du réacteur, ou encore l'utilisation du seul dispositif selon l'invention pour assurer cette fonction, dépend du domaine d'application de l'invention : importance de la charge à soulever, épaisseur de l'entrefer, puissance des moyens d'extraction de chaleur des dispositifs électromagnétiques et de conditionnement du bâtiment qui enferme le réacteur, etc.

Il est évident que le choix d'une option dépend fortement de la température d'équilibre atteinte dans les bobines du stator B et dans l'induit.

Le dispositif selon l'invention libère très rapidement à tout instant la tige de commande A si l'ordre d'arrêt d'urgence est donné par une coupure de l'alimentation électrique des bobines 14.

En cas de chute de la tige de commande A, une dépression apparaît au-dessus de cette tige A dans le fourreau 10, et de l'eau provenant de l'intérieur de la cuve 1 sous le couvercle 2 s'écoule vers le fourreau 10. La vitesse de chute est déterminée par le coefficient de pertes de charges, ajustable par le choix de la géométrie du passage où s'écoule le liquide.

Le dispositif formé par la manchette 25 et les pôles magnétiques 26 permet, tout en ayant un entrefer assez faible peu pénalisant, d'offrir au fluide montant vers le fourreau 10 un passage assez important opposant une perte de charge suffisamment basse pour éviter l'apparition d'une différence de pression entre le haut et le bas de la tige de commande A ralentissant trop le chute de cette tige A.

La manchette 25 peut servir à protéger la gaine 9 contre d'éventuelles sollicitations thermiques produites par des courants de fluides le long de la tige de commande provoqués par un effet de thermosiphon ou par les mouvements de cette ligne A.

L'installation d'un tube-guide amagnétique autour de la tige de commande A peut par exemple servir à préserver les pôles magnétiques 26 d'éventuels accrochages avec le haut des tiges de commande A lorsque pour remettre en place le couvercle 2, après une opération de rechargement du coeur ou analogue, les enceintes étanches constituées des éléments 8, 9 et 10 sont enfilées sur la partie supérieure de ces tiges A.

Les pôles magnétiques 26 peuvent être encastrés dans une partie de l'épaisseur d'un tube-guide amagnétique 30a (figure 4) pour limiter l'entrefer supplémentaire constitué pour ce tube. Ils peuvent aussi être encastrés dans toute l'épaisseur d'un tube-guide amagnétique 30b (en le traversant) pour empêcher la création d'un entrefer supplémentaire. Un passage suffisant est bien évidemment laissé entre le tube-guide et la manchette 25 pour que l'eau s'écoule dans de bonnes conditions.

On voit donc que le dispositif selon l'invention, éventuellement associé à un dispositif électromagnétique complémentaire pour le maintien en position haute de l'ensemble absorbant, assure l'arrêt d'urgence du réacteur dans des conditions de fiabilité absolue : ce qui permet d'envisager son installation dans un réacteur piloté sans dilution d'un poison neutronique dans l'eau primaire.

On voit aussi que la suppression des moyens mécaniques classiques permet, en sus d'une amélioration de la fiabilité de l'arrêt d'urgence, de réduire le temps de déclenchement du lâcher de l'ensemble absorbant et donc d'arrêter le réacteur plus rapidement car le lâcher n'est plus conditionné, comme dans les réacteurs à eau pressurisée connus, par le déplacement sur une certaine course de pièces mécaniques mobiles.

On voit aussi que la suppression des moyens mécaniques classiques permet l'usage d'une tige de commande exempte d'irrégularités géométriques, telles que des cannelures, pouvant lors de l'enlèvement du couvercle de cuve s'accrocher à l'enceinte étanche, consécutivement par exemple à un problème d'alignement, et provoquer aussi le dégagement d'un ensemble absorbant hors de sa cartouche de combustible. L'empêchement d'un dégagement accidentel d'un ensemble absorbant hors de sa cartouche lors du retrait du couvercle pourrait constituer un besoin absolu dans le cas ou l'on n'userait pas d'un poison neutronique soluble.

Enfin, on note, parmi les nombreux autres avantages présentés par le dispositif selon l'invention, une maintenance ou un dépannage aisé sous une faible exposition à des rayonnements ionisants et la possibilité d'utiliser une tige de commande dotée de la façon habituelle d'une tige de démontage interne.

Le mode de réalisation qui vient d'être décrit n'est nullement limitatif. C'est ainsi qu'on peut imaginer d'installer le stator à l'intérieur de l'enceinte étanche amagnétique pour réduire de façon drastique l'entrefer. D'autres dispositions des bobines électromagnétiques et d'autres connexions de ces bobinages peuvent être prévues.

Le dispositif suivant l'invention est applicable non seulement dans le cas des réacteurs nucléaires à eau pressurisée mais également dans le cas de tout autre type de réacteur utilisant des ensembles absorbants à déplacement longitudinal pour une insertion maximale dans le coeur, à partir d'une position extraite, pour l'arrêt d'urgence.

Il est évident que si le système de détection de la position de la tige de commande est suffisamment précis et que si la puissance motrice requise ne pose pas de problèmes thermiques, le dispositif selon l'invention devient utilisable pour régler la réactivité du coeur en sus de la mise en sécurité du réacteur.

Il est également évident que le dispositif selon l'invention trouve une application dans des domaines tout autres que la production d'énergie par réacteur nucléaire.

## Revendications

1. Dispositif de déplacement d'un ensemble d'éléments absorbeurs de neutrons (5) dans le coeur d'un réacteur nucléaire (1), comprenant une tige de commande (A) à laquelle les éléments sont suspendus et une gaine (9) dans laquelle la tige de commande (A) coulisse, caractérisé en ce que la tige est faite au moins partiellement en matériau fortement conducteur de l'électricité et en ce que la gaine est aménagée pour recevoir des enroulements électromagnétiques (14) alimentés par un système polyphasé (31) et agencés pour induire une force axiale sur la tige (A) par un couplage magnétique asynchrone.

2. Dispositif de déplacement selon la revendication 1, caractérisé en ce que le matériau de la tige est une matrice de cuivre ou de l'aluminium dans laquelle on a introduit une dispersion homogène très fine de particules non métalliques stables thermiquement.

3. Dispositif de déplacement selon la revendication 1, dans lequel la tige de commande entoure une tige de démontage (7) qui y coulisse pour détacher les éléments absorbeurs (5) de la tige de commande, caractérisé en ce que la tige de démontage (7) est construite en matière magnétique (29) dans laquelle des lignes de champ magnétique produit par les enroulements électromagnétiques (14) se referment.

4. Dispositif de déplacement selon la revendication 1, caractérisé en ce que les enroulements électromagnétiques (14) entourent la gaine (9), des pôles magnétiques (26) sont disposés entre la gaine et la tige de commande (A) et devant les enroulements, et les pôles occupent des sections de circonférence séparées par des canaux d'écoulement de liquide.

5. Dispositif de déplacement selon la revendication 4, caractérisé en ce qu'un tube de guidage (30) de la tige de commande (1) est suspendu aux extrémités des pôles (26) opposées à la gaine.
